# EUROPEAN PATENT APPLICATION

(11) **EP 2 896 533 A1**
(43) Date of publication of application: **22.07.2015**
(21) Application number: 15150973.4
(22) Date of filing: 13.01.2015
(51) Int. Cl.: B60L 3/00, G01D 5/244, H02P 29/02, H02P 6/16, H02P 7/00

(54) **Semiconductor device and driving apparatus**

(30) Priority: 20.01.2014 JP 2014007484
(71) Applicant: Renesas Electronics Corporation, Kanagawa 211-8668 (JP)
(72) Inventor: Yasuda, Yusuke, Kanagawa, 211-8668 (JP)
(74) Representative: Betten & Resch

(57) **Abstract**

In a drive system using a single synchronous motor which is not paired with a synchronous generator, even if a failure occurs in an analog angle data converter for detecting the rotation angle of the synchronous motor, the driving of the synchronous motor can be continued in a temporal emergency manner. In addition to an analog angle data converter for converting an analog sense signal which is output from a rotation angle sensor of a synchronous motor to digital angle data, a digital angle data converter for converting digital data generated by an analog-to-digital converter to digital angle data is provided. In the case where the analog angle data converter fails, digital rotation angle data used for control of the drive circuit which generates a motor drive control signal for the synchronous motor is switched from data generated by the analog angle data converter to data generated by converting conversion result data of the analog sense signal by the analog-to-digital converter, by the digital angle data converter.

## Description

### CROSS-REFERENCE TO RELATED APPLICATIONS

The disclosure of Japanese Patent Application No. 2014-007484 filed on January 20, 2014 including the specification, drawings and abstract is incorporated herein by reference in its entirety.

### BACKGROUND

The present invention relates to a semiconductor device for motor control and a driving apparatus using the same and, more particularly, to a technique for recovering a failure of the motor control function. The invention relates to, for example, a technique effectively applied to an in-vehicle product required to maintain control in a temporary emergency manner at the time of a failure such as a hydraulic motor of a brake, a motor of an electric steering, or the like.

By electronic control of a vehicle and with the advent of an electric vehicle (EV) and a hybrid vehicle (HEV), demands for the functional safety and operation continuity of a control on an in-vehicle motor are increasing. In particular, in an apparatus using a motor for a drive system of a vehicle, a demand for fail-safety which prevents a failure in advance by sending a notification to a control apparatus before something abnormal occurs and, even something abnormal occurs, continues the operation so that a vehicle can move to a repair shop is increasing. For example, patent literature 1 discloses a technique addressing the safe-safety.

The technique described in the patent literature 1 is premised on a configuration having both a first control unit performing rotation driving control and regenerative control of a synchronous motor for travel driving on the basis of a current signal of a fixed winding of the synchronous motor and a sense output from a rotation angle sensor and a second control unit performing power generation control of a synchronous generator on the basis of a current signal of a fixed winding of the synchronous generator and a sense output from a rotation angle sensor of the synchronous generator, and a failure in one of the units is recovered by the other unit. Since the control performed by the first control unit controlling the synchronous motor and the control performed by the second control unit controlling the synchronous generator are essentially equal, one of them can substitute for a part or all of the other. For example, even when the driving of a synchronous motor becomes impossible due to a failure in a control circuit for controlling the synchronous motor, the driving control of the synchronous motor can be maintained in a temporal emergency manner by using a part or all of a control circuit controlling a synchronous generator.

### Related Art Literature

### Patent Literature

Patent Literature 1: Japanese Unexamined Patent Application Publication No. 2011-234517

### SUMMARY

The technique of the patent literature 1 is premised on usage of both of the control units needing essentially the same controls such as the driving and regenerative control of the motor and the power generation control of the generator. That is, by disposing a microcomputer for motor control and a microcomputer for generator control close to each other, when a failure causing an unusable state is detected in a part of the microcomputer performing the driving control on the synchronous motor, the microcomputer for generator control substitutes for a control related to the failure causing an unusable state in the driving control. Therefore, a failure in a control system of a drive system which is not paired with a generator such as a hydraulic motor of a brake or a drive motor of an electronic steering cannot be recovered by the same method as that for the travel driving system. In short, the technique of the patent literature 1 cannot be applied to a drive system using, as a driving source, a single synchronous motor which is not paired with a synchronous generator.

The above and other subjects and novel features will become apparent from the description of the specification and the appended drawings.

The outline of representative one of embodiments disclosed in the application will be briefly described as follows.

In addition to an analog angle data converter receiving an analog sense signal which is output from a rotation angle sensor of a synchronous motor and converting it to digital angle data, a digital angle data converter receiving digital data generated by an analog-to-digital converter and converting it to digital angle data is provided. In the case where the analog angle data converter fails, digital rotation angle data used for controlling a drive circuit which generates a motor drive control signal of the synchronous motor is switched from data generated by the analog angle data converter to data generated by converting conversion result data of the analog sense signal by the analog-to-digital converter by the digital angle data converter.

An effect obtained by the representative one of the embodiments disclosed in the application will be briefly described as follows.

In a drive system using, as a drive source, a single synchronous motor which is not paired with a synchronous generator, even when an analog angle data converter for detection of the rotation angle of the synchronous motor fails, driving of the synchronous motor can be continued in a temporal emergency manner.

### BRIEF DESCRIPTION OF THE DRAWINGS

FIG. 1 is a block diagram of a driving apparatus according to a first embodiment.
FIG. 2 is a block diagram illustrating a concrete example of a semiconductor device in the driving apparatus of FIG. 1.
FIG. 3 is a flowchart schematically illustrating the details of drive control of a synchronous motor by the driving apparatus.
FIG. 4 is a block diagram of a driving apparatus according to a second embodiment.
FIG. 5 is a block diagram of a driving apparatus according to a third embodiment.

### DETAILED DESCRIPTION

### 1. Outline of Embodiments

First, the outline of embodiments disclosed in the application will be described. A reference numeral in a drawing referred to in parenthesis in the description of the outline of the representative embodiments merely illustrates a matter included in the concept of the component to which the reference numeral is designated.

### Recovery of Failure in Analog Angle Data Converter by Digital Angle Data Converter

[1] A semiconductor device (4) includes: a drive circuit (14) generating a motor drive control signal (U, V, W, UB, VB,WB) for a synchronous motor (1); an analog angle data converter (10) receiving an analog sense signal (APFB) which is output from a rotation angle sensor (2) of the synchronous motor and converting the analog sense signal to digital angle data (RDS1) ; an analog-to-digital converter (12) converting an analog signal to a digital signal; a digital angle data converter (11) receiving the digital data generated by the analog-to-digital converter and converting the digital data to digital angle data (RDS2); and a control circuit (13) making the drive circuit generate a motor drive control signal according to a drive instruction on the basis of the digital angle data. In response to a failure in the analog angle data converter, the control circuit further performs a control of switching digital rotation angle data used for control of the drive circuit from data generated by the analog angle data converter to data generated by converting conversion result data of the analog sense signal obtained by the analog-to-digital converter, by the digital angle data converter.

With the configuration, even when the analog angle data converter for detecting the rotation angle of the synchronous motor fails in the system using, as a drive source, the single synchronous motor which is not paired with the synchronous generator, the driving of the synchronous motor can be continued by using the digital angle data converter in a temporal emergency manner. For the analog angle data converter, a measure against deterioration in conversion precision caused by power supply noise is taken by using a dedicated analog power supply terminal. In the case of using multiple analog angle data converters, analog power supply terminals for assuring conversion precision which is deteriorated by power supply noise have to be separately provided. In the above-described semiconductor device, multiple analog angle data converters are not used. Consequently, it is unnecessary to newly provide an analog power supply terminal, and the number of terminals which can be used in the semiconductor device does not decrease. Since an addition circuit is a digital circuit, benefits of reduction in the circuit area and decrease in power brought about by improvement in the process are gained as compared with the case of using an analog circuit, and increase in the circuit scale by addition of the circuit can be minimized.

### External Input Terminals of Analog Sense Signals Individually Provided for Analog Angle Data Converter and Analog-to-Digital Converter

[2] In the claim [1], the semiconductor device has: an external terminal (P1) which receives the analog sense signal to be supplied to the analog angle data converter from the outside of the semiconductor device; and an external terminal (P2) which receives the analog sense signal to be supplied to the analog-to-digital converter from the outside of the semiconductor device.

With the configuration, an operation of supplying the analog sense signal to the analog angle data converter or to the digital angle data converter via the analog-to-digital converter can be performed on the outside of the semiconductor device. In the case where a circuit performing the input selection is provided in the semiconductor device, if the circuit fails, the driving in the temporary emergency manner becomes impossible.

### Notification of Failure in Analog Angle Data Converter to the Outside

[3] In the claim [2], the control circuit performs a (ERrdc) control of notifying the outside of the semiconductor device of a failure of the analog angle data converter.

With the configuration, switching of the use target from the analog angle data converter to the digital angle data converter can be controlled on the outside of the semiconductor device.

### Analog-to-Digital Converter has Plural Analog/Digital Conversion Channels

[4] In the claim [1], the analog-to-digital converter has a plurality of analog-to-digital conversion channels.

With the configuration, the analog-to-digital converter is not occupied by analog-to-digital conversion of the analog sense signal.

### Current Feedback

[5] In the claim [4], the synchronous motor uses a permanent magnet for a rotating magnetic field and has a fixed winding of a three-phase coil for a fixed magnetic field. The predetermined analog-to-digital conversion channel receives a current signal (IU, IV, IW) supplied to the fixed winding of the synchronous motor and generates current value data. The control circuit makes the drive circuit generate a motor drive control signal according to a drive instruction on the basis of the current value data and the digital angle data.

With the configuration, torque control and speed control can be performed on the synchronous motor with high precision.

### Control Circuit includes CPU and Operation Program of CPU

[6] In the claim [1], the control circuit includes a central processing unit (20) executing an instruction and performing a program process.

With the configuration, the drive control and switching control by the control circuit can be flexibly realized by program control.

### Data Processor of One Chip

[7] In the claim [6], the semiconductor device is formed as a data processor (4) of one chip.

With the configuration, the invention can contribute to reduction in size and power consumption of the semiconductor device.

### Recover Failure of Analog Angle Data Converter by Digital Angle Data Converter

[8] A driving apparatus (100, 200, 300) has a synchronous motor (1), a rotation angle sensor (2) of the synchronous motor, and a data processor (4). The data processor has: a drive circuit (14) generating a motor drive control signal (U, V, W, UB, VB, WB) for the synchronous motor; an analog angle data converter (10) receiving an analog sense signal (APFB) which is output from the rotation angle sensor of the synchronous motor and converting the analog sense signal to digital angle data (RDS1) ; an analog-to-digital converter (12) converting an analog signal to a digital signal; a digital angle data converter (11) receiving the digital data generated by the analog-to-digital converter and converting the digital data to digital angle data (RDS2); and a control circuit (13) making the drive circuit generate a motor drive control signal according to a drive instruction (DRV) on the basis of the digital angle data. In response to a failure in the analog angle data converter, the control circuit further performs a control of switching digital rotation angle data used for control of the drive circuit from data generated by the analog angle data converter to data generated by converting conversion result data of the analog sense signal by the analog-to-digital converter, by the digital angle data converter.

With the configuration, even if the analog angle data converter for detecting the rotation angle of the synchronous motor in the drive system using, as a drive source, the single synchronous motor which is not paired with a synchronous generator fails, the driving of the synchronous motor can be continued by using the digital angle data converter in a temporal emergency manner. For the analog angle data converter, a measure against deterioration in conversion precision caused by power supply noise is taken by using a dedicated analog power supply terminal. In the case of using multiple analog angle data converters, analog power supply terminals for assuring conversion precision which is deteriorated by power supply noise have to be separately provided. In the above-described data processor, multiple analog angle data converters are not used. Consequently, it is unnecessary to newly provide an analog power supply terminal, and the number of terminals which can be used in the data processor does not decrease. Since an addition circuit is a digital circuit, benefits of reduction in the circuit area and decrease in power brought about by improvement in the process are gained more than an analog circuit, and increase in the circuit scale by addition of the circuit can be minimized and it can contribute to reduction in the size of the driving apparatus.

### External Input Terminals of Analog Sense Signals Individually Provided for Analog Angle Data Converter and Analog-to-Digital Converter

[9] In the claim [8], the driving apparatus further includes: an external terminal (P1) which receives the analog sense signal to be supplied to the analog angle data converter from the outside of the data processor; and an external terminal (P2) which receives the analog sense signal to be supplied to the analog-to-digital converter from the outside of the data processor.

With the configuration, an operation of supplying the analog sense signal to the analog angle data converter or to the digital angle data converter via the analog-to-digital converter can be performed on the outside of the semiconductor device. In the case where a circuit performing the input selection is provided in the data processor, if the circuit fails, the driving in the temporary emergency manner becomes impossible.

[10] Notification of Failure in Analog Angle Data Converter to the Outside In the claim [9], the control circuit performs a (ERrdc) control of notifying the outside of the data processor of a failure of the analog angle data converter.

With the configuration, switching of the use target from the analog angle data converter to the digital angle data converter can be controlled on the outside of the data processor.

### External Analog Input Selector

[11] In the claim [10], the driving apparatus has an analog input selector (5) on the outside of the data processor. The analog input selector switches an input destination of an analog sense signal from the rotation angle sensor to the analog-to-digital converter on the basis of notification of a failure of the analog angle data converter.

With the configuration, it is sufficient to select a predetermined analog signal and an analog sense signal to be originally converted by the analog-to-digital converter, by the selector on the outside of the data processor. It is unnecessary to use one conversion channel of the analog-to-digital converter only for conversion of the analog sense signal, so that addition of an analog-to-digital conversion channel is not required.

### Dedicated Power Supply for Actuator

[12] In the claim [9], the synchronous motor is a dedicated power supply for driving an actuator of a vehicle.

Consequently, the driving apparatus is suitable for a drive system driving an actuator such as a brake, an electric steering, or the like in a vehicle.

### 2. Details of Embodiments

Embodiments will be described more specifically.

### Driving Apparatus according to First Embodiment

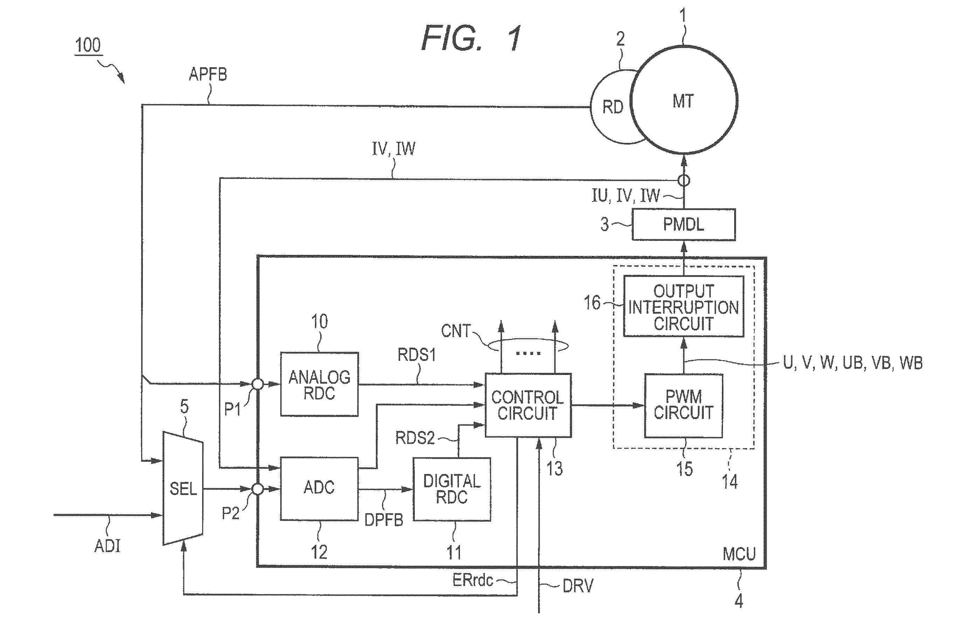

FIG. 1 illustrates a driving apparatus according to a first embodiment. A driving apparatus 100 illustrated in the diagram is applied to, although not limited, control of a drive system of driving an actuator such as a brake, an electric steering, or the like in a vehicle. The driving apparatus 100 has, although not limited, a synchronous motor (MT) 1, a rotation angle sensor (RD) 2 of the synchronous motor 1, a power module (PMDL) 3, a data processor (MCU) 4, and a selector (SEL) 5.

The synchronous motor 1 is, for example, a motor called an IPM (Internal Permanent Magnet) motor of a 3-phase AC drive type using a permanent magnet for a rotating magnetic field, and has a three-phase coil made of a U-phase winding, a V-phase winding, and a W-phase winding for a fixed magnetic field, In the diagram, IU, IV, and IW denote a current signal of the U-phase winding, a current signal of the V-phase winding, and a current signal of the W-phase winding.

The rotation angle sensor 2 is a sensor for detecting the rotation angle of the motor shaft of the synchronous motor 1 and, although not limited, is configured by a resolver (RD) of a variable reluctance (VR) type for detecting the rotation angle by using an AC magnetic field. The rotation angle sensor 2 outputs a signal modulated by a sine wave of the rotation angle of a rotator and a signal modulated by a cosine wave as a resolver output signal (analog sense signal) APFB.

The power module 3 is configured by a switch circuit functioning as an inverter which converts a direct current signal supplied from a not-illustrated battery to three-phase alternate current signals IU, IV, and IW at the time of rotating the synchronous motor 1 and outputs the signals to the synchronous motor 1, and functioning as a rectifier which converts the three-phase alternate current signals IU, IV, and IW generated by the synchronous motor 1 to a direct current signal at the time of decelerating the synchronous motor 1 and supplies the direct current signal to the battery. For the switch control for the inverter operation of the power module 3 and the switch control for the rectifying operation, although not limited, switch control signals U, V, and W and their inverted switch control signals UB, VB, and WB are used.

The data processor 4 is configured by, although not limited, a microcomputer formed on a single semiconductor substrate made of single-crystal silicon by the CMOS integrated circuit manufacturing technique or the like. The data processor 4 performs a drive control of receiving current signals IV and IW of the synchronous motor 1 and the resolver output signal APFB from the rotation angle sensor 2 and rotating the synchronous motor 1 and, in particular, for the converting function of converting the resolver output signal APFB which is supplied to digital angle data, has redundancy which will be described later.

The data processor 4 has a drive circuit 14, an analog angle data converter (analog RDC) 10, an analog-to-digital converter (ADC) 12, a digital angle data converter (digital RDC) 11, and a control circuit 13 which are representatively illustrated.

The drive circuit 14 is a circuit for generating a motor drive control signal for the synchronous motor 1 and is made by, for example, a PWM (Pulse Width Modulation) circuit 15 and an output interruption circuit 16. The PWM circuit 15 generates the switch control signals U, V, and W and their inverted switch control signals UB, VB, and WB in accordance with the drive control data from the control circuit 13. The output interruption circuit 16 is a circuit which is interposed in a path for supplying the switch control signals U, V, and W and their inverted switch control signals UB, VB, and WB to the PMDL 3 and which interrupts supply of the switch control signals U, V, and W and their inverted switch control signals UB, VB, and WB in prompt response to a stop instruction of a drive instruction DRV of the synchronous motor 1 supplied from the outside of the data processor.

The analog angle data converter (analog RDC) 10 receives the resolver output signal APFB output from the rotation angle sensor 2 of the synchronous motor 1 and converts it to digital angle data RDS1. The converted data angle data RDS1 is used in the control circuit 13. Although not limited, the analog angle data converter (analog RDC) 10 receives the resolver output signal APFB supplied from an external terminal P1.

The analog-to-digital converter (ADC) 12 is a circuit for converting an analog signal to a digital signal and has a plurality of analog-to-digital conversion channels. To one analog-to-digital conversion channel, the current signals IV and IW of the synchronous motor 1 are fed back. To another analog-to-digital conversion channel, a signal selected by the selector 5 is supplied from an external terminal P2. The selector 5 selects output of the resolver output signal APFB when an error signal ERrdc is activated (to the enable level), and selects output of a proper analog signal ADI in an active state (disable level) of the error signal ERrdc. Conversion result data of the analog signal ADI is used in the control circuit 13.

The digital angle data converter (digital RDC) 11 receives digital data DPFB as a conversion result of the resolver output signal APFB by the analog-to-digital converter 12 and converts it to digital angle data RDS2. The converted digital angle data RDS2 is used in the control circuit 13.

The control circuit 13 performs general control on the data processor 4 and performs a control of driving the synchronous motor 1, an alternative control to the digital angle data converter 11, and the like, and controls on the parts in the data processor 4 are performed by a collectively-called control signal CNT.

The control of driving the synchronous motor is a control of making the PWM circuit 15 in the drive circuit 14 generate the switch control signals U, V, and W and their inverted switch control signals UB, VB, and WB according to a drive instruction on the basis of the digital angle data RDS1 or RDS2 and the feedback data of the current signals IV and IW. At this time, the control circuit 13 makes the error signal ERrdc inactive and uses the digital angle data RDS1 converted from the resolver output signal APFB by using the analog RDC 10. The analog-to-digital conversion result data by the ADC 12 is used by the control circuit 13. The digital RDC 11 is made inactive.

The control of substitution to the digital angle data converter 11 is a control for detection of a conversion failure of the analog RDC 10 and switching to the digital angle data RDS2 responding to the failure detection. As a method of detecting a conversion failure of the analog RDC 10 by the control circuit 13, for example, it is sufficient to detect a failure by a state that a detection value is largely deviated from a target value or the like in a feedback control using the digital angle data RDS1.

On detection of a failure, the control circuit 13 activates the error signal ERrdc toward the outside of the data processor 4 to make the selector 5 select the resolver output signal APFB. To the inside of the data processor 4, the resolver output signal APFB supplied from the external terminal P2 of the ADC 12 is converted to the digital data DPFB, and the converted digital data DPFB is converted to the digital angle data RDS2 by the digital angle data converter 11. By using the converted digital angle data RDS2 in place of the digital angle data RDS1, the control of driving the synchronous motor can be continued in a temporal emergency manner.

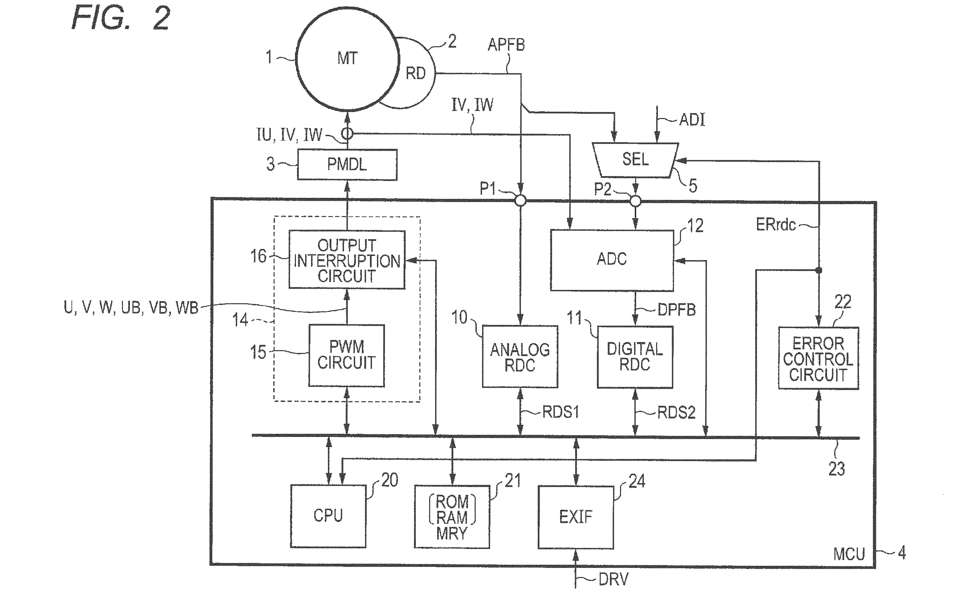

In FIG. 2 illustrating a concrete example of the data processor 4, the control circuit 13 includes a central processing unit (CPU) 20 executing an instruction and performing a program process, a memory (MRY) 21 including a ROM and a RAM, an external interface circuit (EXIF) 24 receiving a drive instruction DRV and the like, an error control circuit 22, and an internal bus 23. To the internal bus 23, the drive circuit 14, the analog RDC 10, the digital RDC 11, and the ADC 12 are connected. Detection of a conversion failure of the analog RDC 10 is performed by the error control circuit 22. The error signal ERrdc is supplied as an interrupt request signal to the COU 20. When the signal is activated, an interrupt process for switching to the digital angle data RDS2 responding to the failure detection is started. The details of the process are as described above.

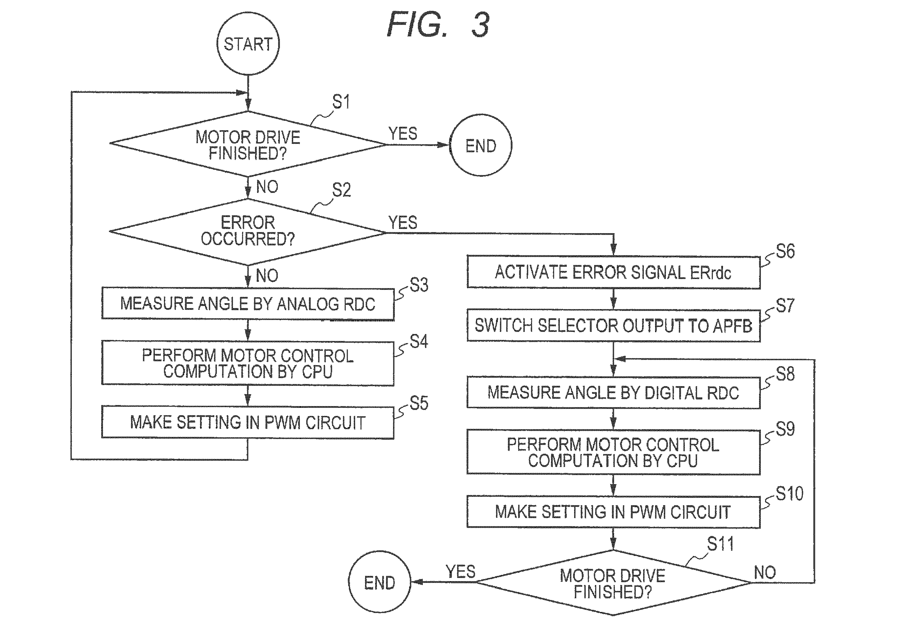

FIG. 3 illustrates a flow of the driving control of the synchronous motor by the driving apparatus 100. When the motor control of the synchronous motor 1 is started and it is determined in step S1 that end of the motor drive is not instructed, the error control circuit 22 determines whether a conversion error occurs in the analog RDC 10 or not (S2). When there is no error in the determination in step S2, the resolver output signal APFB is converted to the digital angle data RDS1 by using the analog RDC 10 and the rotation angle is measured (S3), and the CPU 20 computes the drive control data of the synchronous motor 1 on the basis of the digital angle data RDS1 and the like (S4). When the computed drive control data is set in the PWM circuit 15, the switch control signals U, V, and W and their inverted switch control signals UB, VB, and WB of the frequency and phase according to the setting are generated (S5) . By repeating the process, the synchronous motor 1 is driven.

When occurrence of an error is determined in step S2, the error signal ERrdc is activated (S6) and, by the activation, the selector 5 selects the resolver output signal APFB and outputs it (S7). The resolver output signal APFB supplied to the ADC 12 via the selector 5 is converted to the digital data DPFB, and the converted digital data DPFB is converted to the digital angle data RDS2 by the digital angle data converter 11 (S8). The CPU 20 computes drive control data of the synchronous motor 1 on the basis of the digital angle data RDS2 and the like (S9). When the computed drive control data is set in the PWM circuit 15, the switch control signals U, V, and W and their inverted switch control signals UB, VB, and WB of the frequency and phase according to the setting are generated (S10). By repeating the processes in steps S8 to S10, the digital angle data RDS2 is used in place of the digital angle data RDS1, and the drive control of the synchronous motor 1 can be continued in a temporal emergency manner. When the end of the motor drive is instructed in step S1 or S11, the process is finished (END).

By the first embodiment, the following effects are obtained.
(1) Even when the analog angle data converter 10 for detecting the rotation angle of the synchronous motor 1 fails in the driving apparatus 100 using, as a drive source, the single synchronous motor 1 which is not paired with a synchronous generator like a driving apparatus for driving an actuator such as a brake or an electric steering in a vehicle, the driving of the synchronous motor 1 can be continued by using the digital angle data converter 11 in a temporal emergency manner. For the analog angle data converter 10, a measure against deterioration in conversion precision caused by power supply noise is taken by using a dedicated analog power supply terminal. In the case of using multiple analog angle data converters 10, analog power supply terminals for assuring conversion precision which is deteriorated by power supply noise have to be separately provided. In the data processor 4 in the driving apparatus 100, multiple analog angle data converters 10 are not used. Consequently, it is unnecessary to newly provide an analog power supply terminal, and the number of terminals which can be used in the semiconductor device does not decrease. Since an addition circuit is a digital circuit, benefits of reduction in the circuit area and decrease in power brought about by improvement in the process are gained as compared with the case of using an analog circuit, and increase in the circuit scale by addition of the circuit can be minimized. It can also contribute to down-sizing of the driving apparatus 100.
(2) The operation of supplying the resolver output signal APFB to the analog angle data converter 10 or to the digital angle data converter 11 via the analog-to-digital converter 12 is performed on the outside of the data processor 4. In the case where the selection is performed by a selector in the data processor 4, if the internal selector and the analog RDC 12 fail, the driving in the temporary emergency manner becomes impossible. However, there is no such a fear in the case of the driving apparatus 100.
(3) Since a failure in the analog angle data converter 10 is notified to the outside of the data processor 4 by the error signal ERrdc, switching of the use target from the analog angle data converter 10 to the digital angle data converter 11 can be easily controlled on the outside of the data processor.
(4) The selector 5 whose output is coupled to the input of one analog-to-digital conversion channel switches the input destination of the resolver output signal APFB to the analog-to-digital converter 12 on the basis of the notification of the failure in the analog angle data converter 10. Therefore, it is sufficient to select a predetermined analog signal ADI and the resolver output signal APFB to be originally converted by the analog-to-digital converter 12, by the selector 5 on the outside of the data processor. It is consequently unnecessary to use one conversion channel of the analog-to-digital converter 12 only for conversion of the resolver output signal APFB, so that addition of an analog-to-digital conversion channel is not required. Driving Apparatus according to Second Embodiment

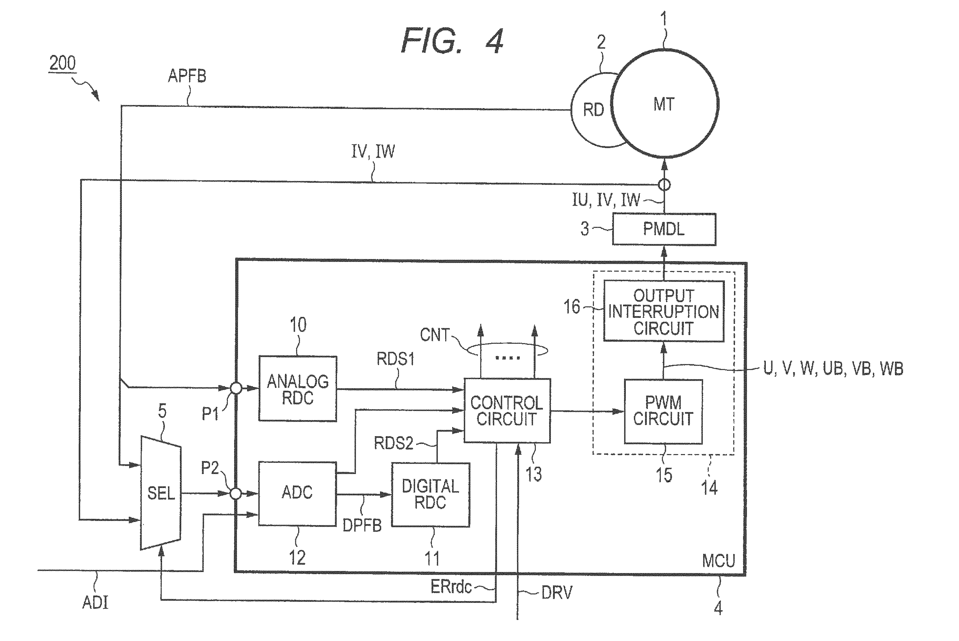

FIG. 4 illustrates a driving apparatus according to a second embodiment. A driving apparatus 200 illustrated in the diagram is different from the first embodiment with respect to the point that in place of the analog signal ADI, the current signals IV and IW fed back from the synchronous motor 1 are supplied to one of input terminals of the selector 5. With the configuration, in the case where a conversion error occurs in the analog RDC 10, the resolver output signal APFB is selected by the selector 5 in place of the current signals IV and IW fed back. Therefore, the current signals IV and IW which are fed back are not used in the drive control of the motor 1 in a temporal emergency manner using the digital RDC 11. By making the setting of the PWM circuit 15 on the basis of both the current value data of the current signals IV and IW which are fed back and the digital angle data of the resolver output signal APFB, torque control and speed control can be performed on the synchronous motor 1 with high precision. For the driving in a temporal emergency manner, even deterioration in the drive precision caused by no use of the current value data of the current signals IV and IW which are fed back is allowed, there is no inconvenience. Even in the driving in a temporal emergency manner, the input of the analog signal ADI can be continuously used. In this sense, the second embodiment has significance in the case where the analog signal ADI is important from the viewpoint of control more than the current signals IV and IW which are fed back. Since the other point is similar to that of the first embodiment, its detailed description will not be repeated.

### Driving Apparatus according to Third Embodiment

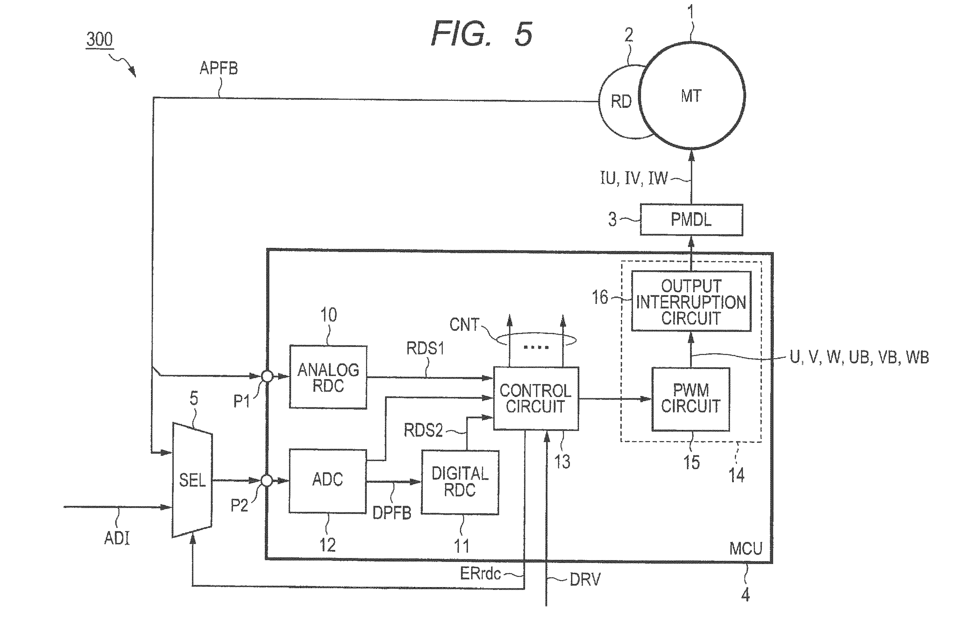

FIG. 5 illustrates a driving apparatus according to a third embodiment. A driving apparatus 300 illustrated in the drawing is an example of the case premised on a configuration in which the current signals IV and IW do not have to be fed back from the synchronous motor 1. Since the other point is similar to the first embodiment, its detailed description will not be repeated.

Obviously, the present invention is not limited to the foregoing embodiments and can be variously modified without departing from the gist.

For example, the driving apparatus is not limited to an in-vehicle driving apparatus and can be applied to a driving apparatus of industrial equipment. The control circuit 13 is not limited to the configuration based on the program control by the CPU but can be also configured by using a hard-wired logic.

The data processor is not limited to a microcomputer of one chip but may be of multiple chips. The memory may be an external memory.

It is assumed that the conversion error in the analog RDC 10 is an error such that a control allowed in the drive control of the synchronous motor 1 cannot be realized and is not limited to an error that conversion is impossible.

## Claims

1. A semiconductor device comprising:
a drive circuit generating a motor drive control signal for a synchronous motor;
an analog angle data converter receiving an analog sense signal which is output from a rotation angle sensor of the synchronous motor and converting the analog sense signal to digital angle data;
an analog-to-digital converter converting an analog signal to a digital signal;
a digital angle data converter receiving the digital data generated by the analog-to-digital converter and converting the digital data to digital angle data; and
a control circuit making the drive circuit generate a motor drive control signal according to a drive instruction on the basis of the digital angle data,
wherein in response to a failure in the analog angle data converter, the control circuit further performs a control of switching digital rotation angle data used for control of the drive circuit from data generated by the analog angle data converter to data generated by converting conversion result data of the analog sense signal obtained by the analog-to-digital converter, by the digital angle data converter.

2. The semiconductor device according to claim 1, further comprising:
an external terminal which receives the analog sense signal to be supplied to the analog angle data converter from the outside of the semiconductor device; and
an external terminal which receives the analog sense signal to be supplied to the analog-to-digital converter from the outside of the semiconductor device.

3. The semiconductor device according to claim 1 or 2,
wherein the control circuit performs a control of notifying the outside of the semiconductor device of a failure of the analog angle data converter.

4. The semiconductor device according to one of claims 1 to 3,
wherein the analog-to-digital converter has a plurality of analog-to-digital conversion channels.

5. The semiconductor device according to one of claims 1 to 4,
wherein the synchronous motor uses a permanent magnet for a rotating magnetic field and has a fixed winding of a three-phase coil for a fixed magnetic field,
the predetermined analog-to-digital-conversion channel receives a current signal which is supplied to the fixed winding of the synchronous motor and generates current value data, and
the control circuit makes the drive circuit generate a motor drive control signal according to a drive instruction on the basis of the current value data and the digital angle data.

6. The semiconductor device according to one of claims 1 to 5,
wherein the control circuit includes a central processing unit executing an instruction and performing a program process.

7. The semiconductor device according to claim 6, which is formed as a data processor of one chip.

8. A driving apparatus having a synchronous motor, a rotation angle sensor of the synchronous motor, and a data processor,
wherein the data processor comprises:
a drive circuit generating a motor drive control signal for the synchronous motor;
an analog angle data converter receiving an analog sense signal which is output from the rotation angle sensor of the synchronous motor and converting the analog sense signal to digital angle data;
an analog-to-digital converter converting an analog signal to a digital signal;
a digital angle data converter receiving the digital data generated by the analog-to-digital converter and converting the digital data to digital angle data; and
a control circuit making the drive circuit generate a motor drive control signal according to a drive instruction on the basis of the digital angle data,
wherein in response to a failure in the analog angle data converter, the control circuit further performs a control of switching digital rotation angle data used for control of the drive circuit from data generated by the analog angle data converter to data generated by converting conversion result data of the analog sense signal by the analog-to-digital converter, by the digital angle data converter.

9. The driving apparatus according to claim 8, further comprising:
an external terminal which receives the analog sense signal to be supplied to the analog angle data converter from the outside of the data processor; and
an external terminal which receives the analog sense signal to be supplied to the analog-to-digital converter from the outside of the data processor.

10. The driving apparatus according to claim 9, wherein the control circuit performs a control of notifying the outside of the data processor of a failure of the analog angle data converter.

11. The driving apparatus according to claim 8, 9 or 10, further comprising an analog input selector on the outside of the data processor,
wherein the analog input selector switches an input destination of an analog sense signal from the rotation angle sensor to the analog-to-digital converter on the basis of notification of a failure of the analog angle data converter.

12. The driving apparatus according to one of claims 8 to 11,
wherein the synchronous motor is a dedicated power supply for driving an actuator of a vehicle.
